# EUROPEAN PATENT SPECIFICATION

(11) **EP 3 315 897 B1**
(45) Date of publication and mention of the grant of the patent: **01.07.2020**
(21) Application number: 15896345.4
(22) Date of filing: 25.06.2015
(51) Int. Cl.: G01B 11/00, B65H 7/14, G01V 8/10, B65H 23/032, B65H 26/02, G01N 21/86, G01N 21/89

(54) **WEB DETECTION DEVICE AND DETECTION METHOD**
NETZERKENNUNGSVORRICHTUNG UND ERKENNUNGSVERFAHREN
DISPOSITIF DE DÉTECTION DE BANDE ET PROCÉDÉ DE DÉTECTION

(43) Date of publication of application: 02.05.2018
(73) Proprietor: Nireco Corporation, Tokyo 192-8522 (JP)
(72) Inventor: OGURA Masaya, Hchioji-shi Tokyo 192-8522 (JP); UJIIE Youichi, Hchioji-shi Tokyo 192-8522 (JP); MURAMATSU Kouichi, Hchioji-shi Tokyo 192-8522 (JP)
(74) Representative: Gill Jennings & Every LLP
(86) International application number: PCT/JP2015/068288
(87) International publication number: WO 2016/208023

(56) References cited:
- WO-A1-2014/068188
- JP-A- H0 560 513
- JP-A- H0 560 513
- JP-A- H07 128 240
- JP-A- H08 122 266
- JP-A- H10 300 447
- JP-A- 2000 205 847
- JP-A- 2007 024 873
- JP-A- 2009 258 111
- US-A- 4 391 505
- US-A1- 2001 042 847
- US-A1- 2006 027 767
- US-A1- 2012 300 212
- US-B1- 6 566 670

## Description

### Technical Field

The present invention relates to a detection device and a detection method for optically detecting a line and a pattern printed on a web, an end of a web, and the like.

### Background Art

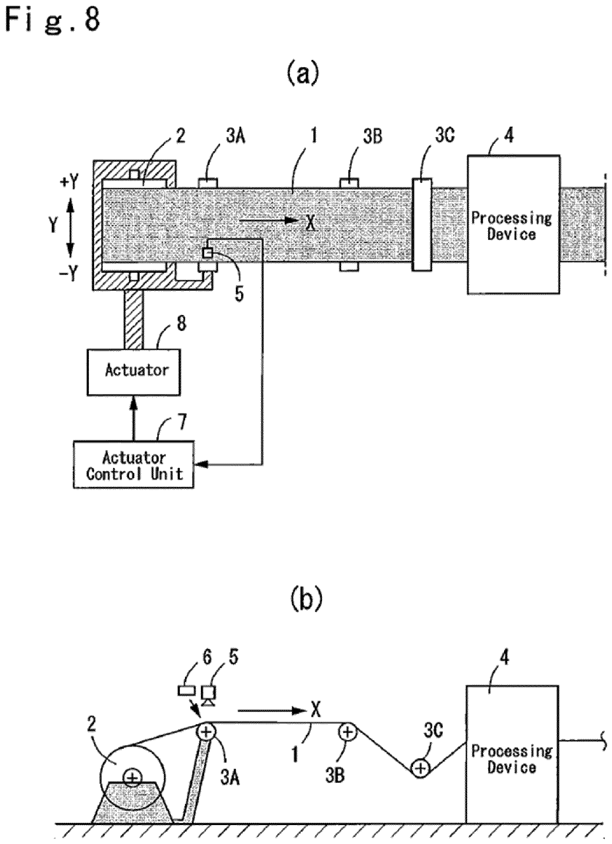

Figs.8(a) and 8(b) show a conventional web meandering control device applied to the web processing device. The web 1 is rewound from the rewind reel 2 and guided by a deflector roll 3A and a guide roll 3B to travel in the arrow-marked direction X to be subjected to predetermined processing work at a processing device 4. It is to be noted that no mechanism for driving the web to travel is illustrated.

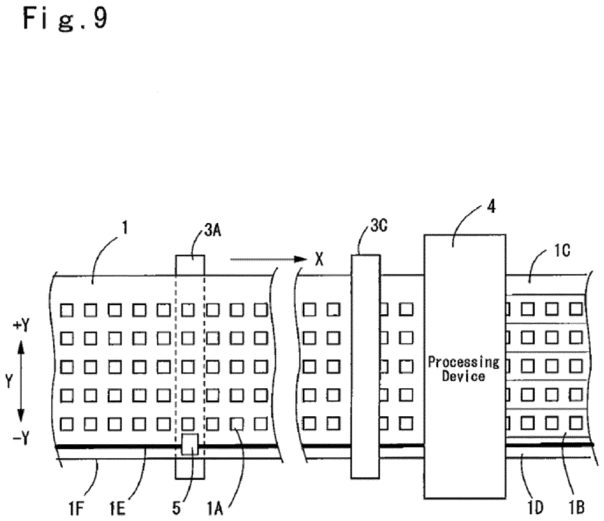

One example of the web 1 is illustrated in Fig. 9, which is a plan view of the embodiment. The web 1 is printed with identical patterns 1A in plural rows on the upper surface thereof (in Fig. 9, for example, in five rows arranged widthwise in the arrow-marked direction Y perpendicular to the arrow marked direction X). It is to be noted that the intervals between respective neighboring rows are equal to each other where patterns 1A are repeatedly printed with a fixed space therebetween taken in the arrow-marked direction X which corresponds to the web travel direction.

There are many types of processing device 4, one of which is referred to as a longitudinal cutting device which separates the web along the direction X into plural sections. The web 1 which has arrived at the processing device 4 is cut thereby at a position between respective neighboring rows to be formed into a plurality of sections 1B.

The processing device 4 cuts the web 1 in such a way that each cut-off strip 1B has an equal width in the arrow-marked direction Y with patterns 1A each taking a center position in the width direction of each section 1B. The marginal portions 1C and 1D are discarded while being cut off by the processing device 4. Another example of the processing device 4 includes a punching type which punches the web to cut off the patterns 1A individually. Needless to say, the processing device 4 is not limited to the above two examples but there are a variety of types.

By the way, in case the processing device 4 is a longitudinal cutter, if the web 1 deviates in the width direction Y from the predetermined travel course, the patterns 1A are caused to swerve from their central position to the point where the patterns 1A themselves are severed. Also, in case the processing device 4 is a punching machine, if the web deviate toward the width direction Y from the predetermined travel course, the precise punching work along the circumference of the patterns 1A will not be performed with the result that the patterns 1A themselves are severed.

Therefore, as illustrated in Fig. 9, a line 1E is printed near an end of the web 1 where the line 1E does not affect the picture pattern 1A, simultaneously when the patterns 1A are printed on the web 1. When the web 1 is being made to proceed to the processing device 4, the line 1E irradiated with a light source 6 is detected by an imaging device 5 disposed above the deflector roller 3A as illustrated in Fig. 8(b). Note that in Figs. 8(a) and 9, the light source 6 is not illustrated. Then, a detection signal of the line 1E generated according to an image photographed by the imaging device 5 is fetched into an actuator control unit 7, and a control signal for matching the line 1E with a line reference position set in advance is generated. The actuator 7 is controlled by the control signal to move the rewind reel 2 in a +Y direction or a -Y direction. Thus, travelling of the web 1 is controlled such that the line 1E matches the line reference position, and any possible deviation of the pattern 1A proceeding to the processing device 4 is corrected.

The line 1E of the web 1 in the image photographed by the imaging device 5 is printed in a color that can be distinguished from the background color of the web 1. However, if the web 1 is made of a transparent film, the deflector roller 3A which guides the web 1 is also photographed by the imaging device 5 through the transparent film.

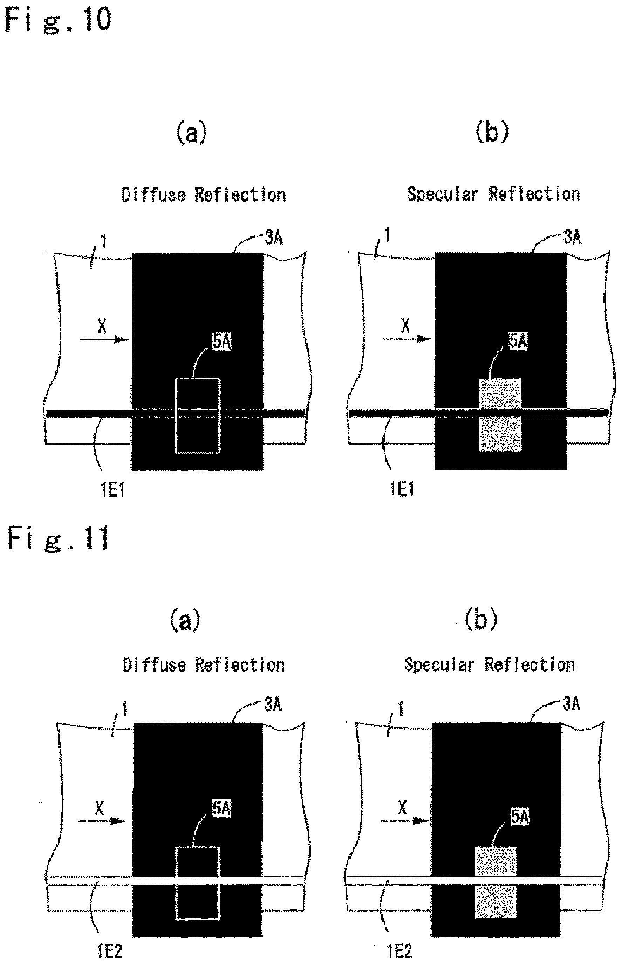

For example, when the black deflector roller 3A is used in a case where the web 1 is made of a transparent film, if the line 1E printed on the web 1 is a black line 1E1, an image of a photography field of view 5A of the imaging device 5 obtained by diffusely reflecting a light beam from the light source 6 is an image including a black image of the deflector roller 3A and a black image of the line 1E1 as illustrated in Fig. 10(a). Therefore, contrast of the photography field of view 5A in this case is considerably low, and it becomes very difficult to discriminate the black line 1E1 from the image photographed by the imaging device 5.

However, as illustrated in Fig. 10(b), in the image of the photography field of view 5A of the imaging device 5 obtained by specularly reflecting a light beam from the light source 6, a surface of the web 1 made of the transparent film is brighter due to the specular reflection and the black color of the deflector roller 3A under the web 1 becomes inconspicuous. Therefore, the contrast of the photography field of view 5A in this case becomes higher and the black line 1E1 of the image can be more easily discriminated.

In contrast, when the black deflector roll 3A is used in a case where the web 1 is made of a transparent film, if the line 1E printed on the web 1 is a white line 1E2, an image of the photography field of view 5A of the imaging device 5 obtained by diffusely reflecting a light beam from the light source 6 is an image including the black image of the deflector roll 3A and a white image of the line 1E2 as illustrated in Fig. 11(a). Therefore, the contrast of the photography field of view 5A in this case is higher, and it is easier to discriminate the white line 1E2.

However, as illustrated in Fig. 11(b), in an image of the photography field of view 5A of the photography device 5 obtained by specularly reflecting a light beam from the light source 6, the surface of the web 1 made of the transparent film is brighter due to the specular reflection and the black color of the deflector roller 3A under the web 1 becomes inconspicuous. Therefore, contrast of the photography field of view 5A in this case becomes considerably lower and it is extremely difficult to discriminate the white line 1E2.

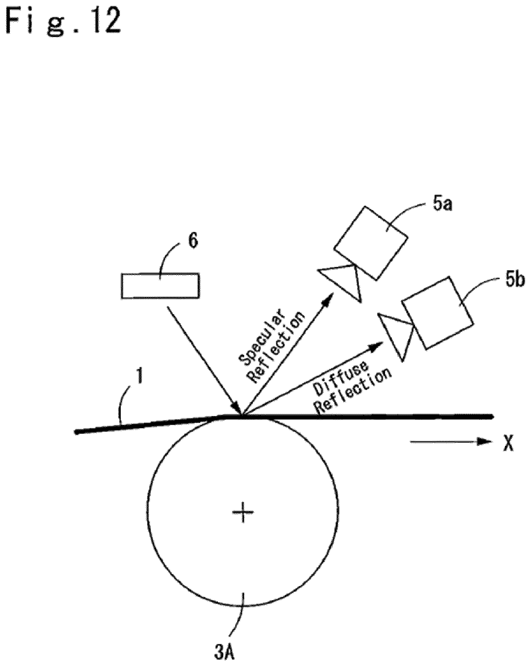

In the above case, as illustrated in Fig. 12, the line 1E of the web 1 made of the transparent film is irradiated by the light source 6. A specular reflection image formed by a light beam emitted from the light source 6 and specularly reflected by the surface of the web 1 is photographed by an imaging device 5a. A diffuse reflection image formed by a light beam diffusely reflected by the surface of the web 1 is photographed by an imaging device 5b. In the case of the black line 1E1 in which the color of the line 1E is black, the black line 1E1 is detected according to the specular reflection image photographed by the imaging device 5a. In the case of the white line 1E2 in which the color of the line 1E is white, the line 1E2 is detected according to the diffuse reflection image photographed by the imaging device 5b. Therefore, an image with high contrast can be obtained, and the line 1E can be detected with a high S/N ratio irrespective of whether the line 1E is black or white. Patent Literature 1 discloses an example of using one light source and two photography devices as described above.

### Citation List

### Patent Literature

Patent Literature 1: JP 07-128240 A

### Summary of Invention

### Technical Problem

However, if a technique described with reference to Fig. 12 is adopted, there is a problem that the two imaging devices 5a, 5b are required. Furthermore, since it is necessary to dispose the imaging device 5a at an angle at which the imaging device 5a can photograph a specular reflection image, and to dispose the imaging device 5b at an angle at which the photography device 5b can photograph a diffuse reflection image, there is a problem that it takes time to dispose the imaging devices 5a, 5b.

An object of the present invention is to provide a web detection device and a detection method which solves the above-described problems by enabling a single imaging means to photograph a specular reflection image and a diffuse reflection image.

### Solution to Problem

In order to achieve the above-described object, a web detection device according to the invention includes: a light source configured to irradiate an area of a web that includes a detection target with a light beam, the area including the detection target; and an imaging means configured to photograph a photography field of view including a first field of view area that is an area in which the light beam from the light source is specularly reflected and diffusely reflected and which includes the detection target of the web, and a second field of view area that is an area in which the light beam from the light source is diffusely reflected and which includes the detection target of the web. The web detection device detects the detection target according to an image of the photography field of view.

According to an embodiment, in the web detection device, the light source and the imaging means are disposed such that the first field of view area and the second field of view area are aligned along a travel direction of the web.

According to an embodiment, in the web detection device, the detection target is detected according to an image with higher contrast from among an image of the first field of view area of the web photographed by the imaging means and an image of the second field of view area of the web photographed by the imaging means.

According to an embodiment, in the web detection device, the detection target of the web is one of a line printed on the web along the travel direction, a web end which is along the travel direction of the web, and a pattern repeatedly printed on the web in the travel direction.

A web detection method according to the invention includes: irradiating an area of a web that includes a detection target with a light beam, the area including the detection target; photographing a photography field of view by an imaging means, the photography field of view including a first field of view area that is an area in which the light beam is specularly reflected and diffusely reflected on the web and which includes the detection target of the web, and a second field of view area that is an area in which the light beam is diffusely reflected on the web and which includes the detection target of the web; and detecting the detection target according to an image of the photography field of view.

According to an embodiment, in the web detection method, the light source and the imaging means are disposed such that the first field of view area and the second field of view area are aligned along a travel direction of the web.

According to an embodiment, in the web detection method, the detection target is detected according to an image with higher contrast from among an image of the first field of view area of the web photographed by the imaging means and an image of the second field of view area of the web photographed by the imaging means.

According to an embodiment, in the web detection method, the detection target of the web is one of a line printed on the web along the travel direction, a web end which is along the travel direction of the web, and a pattern repeatedly printed on the web in the travel direction.

### Advantageous Effects of Invention

According to the present invention, the imaging means photographs the photography field of view including the first field of view area in which the light beam from the light source is specularly reflected and diffusely reflected and the second field of view area in which the light beam from the light source is diffusely reflected. Therefore, the present invention is advantageous in that only one light source and only one imaging means are required.

### Brief Description of Drawings

Fig. 1 is an explanatory diagram illustrating a schematic configuration of a web detection device according to an embodiment of the present invention.
Fig. 2 is an explanatory diagram of a photography field of view on a web photographed by an imaging device of the web detection device according to the embodiment of the present invention.
Fig. 3 is an explanatory diagram of the photography field of view on the web photographed by the imaging device in a case where a black line is printed on the web made of a transparent film under which a black guide roll is located in the web detection device according to the embodiment of the present invention.
Fig. 4 is an explanatory diagram of the photography field of view on the web photographed by the photography device in a case where a white line is printed on the web made of the transparent film under which the black guide roller is located in the web detection device according to the embodiment of the present invention.
Fig. 5 is an explanatory diagram of a sensor for detecting deviation of the line of the web by using a ZNCC method.
Fig. 6 is an explanatory diagram of template matching using the ZNCC method.
Fig. 7 is an explanatory diagram of an image having the highest correlation obtained by template matching.
Fig. 8(a) is a plan view of a conventional web meandering control device, and Fig. 8(b) is a side view of the conventional web meandering control device.
Fig. 9 is an explanatory diagram of a web which travels on the conventional web meandering control device and on which patterns and a line are printed.
Fig. 10(a) is an explanatory diagram of the photography field of view of diffuse reflection on the web photographed by the imaging device in a case where the black line is printed on the web made of the transparent film under which the black guide roller is located, and Fig. 10(b) is an explanatory diagram of the photography field of view of specular reflection.
Fig. 11(a) is an explanatory diagram of the photography field of view of diffuse reflection on the web photographed by the imaging device in a case where the white line is printed on the web made of the transparent film under which the black guide roll is located, and Fig. 11(b) is an explanatory diagram of the photography field of view of specular reflection.
Fig. 12 is an explanatory diagram of conventional image acquisition.

### Description of Embodiments

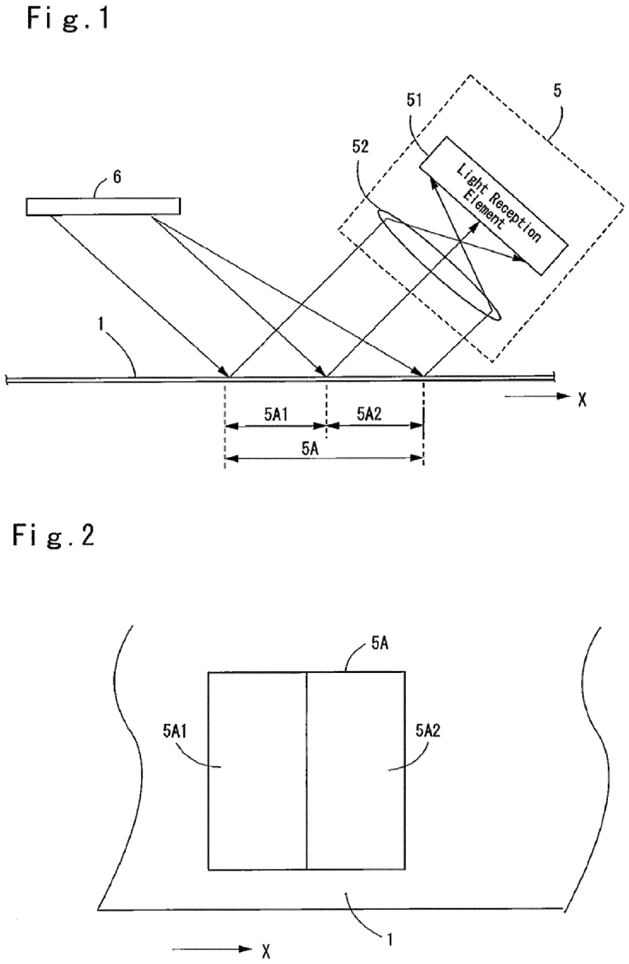

Fig. 1 illustrates a web detection device according to one embodiment of the present invention. When a light source 6 having a planar shape is disposed above the web 1 and in parallel to the web 1 and the web 1 isirradiated with a light beam in an oblique direction, the light beam being generated by the light source 6, a photography field of view 5A of the web 1 photographed by a light reception element 51 through a lens 52 of an imaging device 5 can be divided into a first field of view area 5A1 and a second field of view area 5A2. In the first field of view area 5A1, a specular reflection light beam reflected at an angle identical to an incident angle of an incident light beam and diffuse reflection light beams reflected at various angles different from the incident angle are mixedly generated. In the second field of view area 5A2, only diffuse reflection light beams are generated.

As illustrated in Fig. 2, the first field of view area 5A1 in the photography field of view 5A is located on the upstream side in a travel direction of the web 1 indicated by arrow X, and the second field of view area is located on the downstream side. As described, by disposing the one light source 6 and the one photography device 5 with respect to the web 1 as illustrated in Fig. 1, it is possible to generate the first field of view area 5A1 and the second field of view area 5A2 in the one photography field of view 5A photographed by the imaging device 5, the first field of view area 5A1 and the second field of view area 5A2 being aligned in the travel direction of the web 1.

Therefore, in a case where the web 1 is made of a transparent film, an image of an area having higher contrast with respect to a line 1E appearing in the first field of view area 5A1 and the second field of view area 5A2 is fetched from among the first field of view area 5A1 and the second field of view area 5A2, depending on the color of the line 1E printed on the portion captured by the photography field of view 5A of the web 1 and the color of a deflector roller 3A guiding the web 1 under the line 1E. Thus, an image having high S/N can be acquired, and the position of the line 1E can be accurately detected.

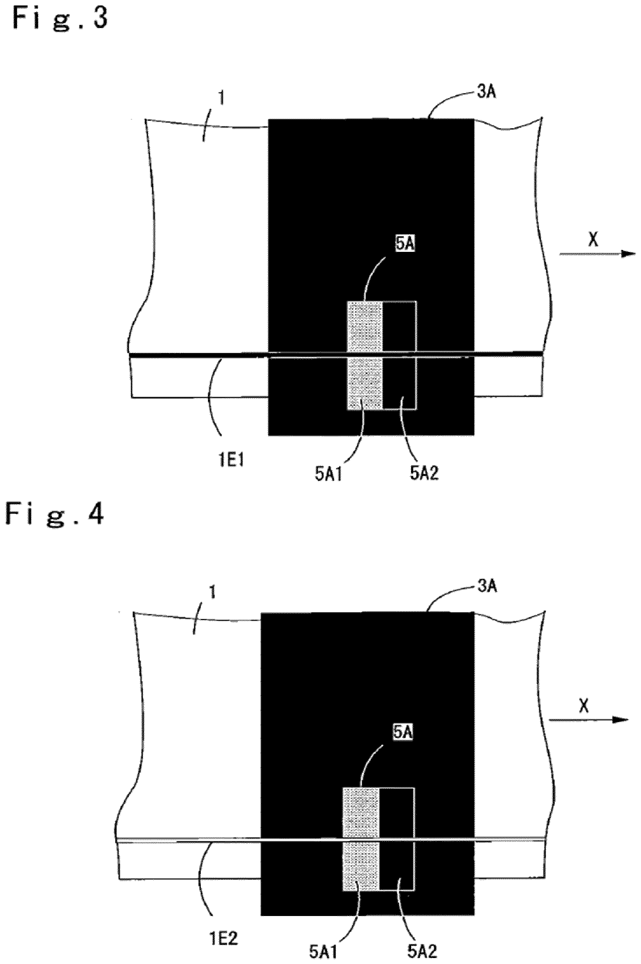

Fig. 3 is a diagram illustrating the photography field of view 5A when the line 1E printed on the web 1 is a black line 1E1 in a case where a transparent film is used as the web 1 and the deflector roller 3A is black. Here, in the first field of view area 5A1 of the photography field of view 5A, since the web 1 made of the transparent film is brightened by specular reflection, the black color of the deflector roller 3A under the web 1 is inconspicuous and the black line 1E1 is conspicuous. That is, the image of the first field of view area 5A1 exhibits higher contrast.

However, in the second field of view area 5A2, the black color of the deflector roller 3A under the web 1 made of the transparent film, the black color penetrating the web 1, is conspicuous due to diffuse reflection. Therefore, the black line 1E1 is inconspicuous. That is, the image of the second field of view area 5A2 exhibits lower contrast.

Therefore, in a case where the web 1 which is made of the transparent film and on which the black line 1E1 is printed is used when the deflector roller 3A under the web 1 is black, stable meandering control can be performed by detecting the black line 1E1 using the image of the first field of view area 5A1 in the photography field of view 5A.

Fig. 4 is a diagram illustrating the photography field of view 5A when the line 1E printed on the web 1 is a white line 1E2 in a case where a transparent film is used as the web 1 and the deflector roller 3A is black. Here, in the first field of view area 5A1 of the photography field of view 5A, since the web 1 made of the transparent film is brightened by specular reflection, the black color of the deflector roller 3A under the web 1 is inconspicuous and the white line 1E2 is also conspicuous. That is, the image of the first field of view area 5A1 exhibits lower contrast.

However, in the second field of view area 5A2, the black color of the deflector roller 3A under the web 1 made of the transparent film, the black color penetrating the web 1, is conspicuous due to diffuse reflection. Therefore, the white line 1E2 is conspicuous. That is, the image of the second field of view area 5A2 exhibits higher contrast.

Therefore, in a case where the web 1 which is made of the transparent film and on which the line 1E2 is printed in white is used when the deflector roller 3A under the web 1 is black, stable meandering control can be performed by detecting the white line 1E2 using the image of the second field of view area 5A2 in the photography field of view 5A.

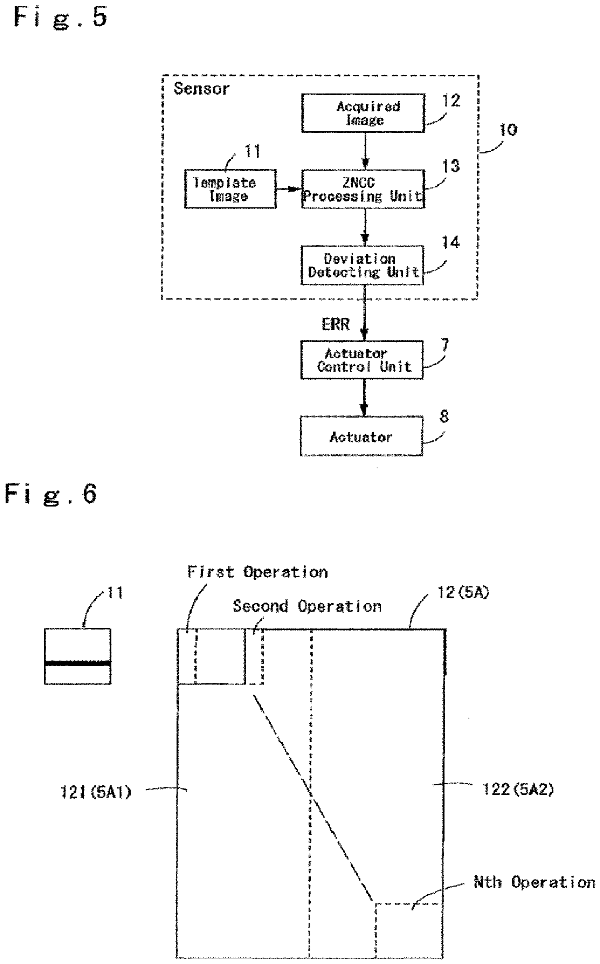

Fig. 5 illustrates a sensor 10 using a ZNCC (Zero-mean Normalaized Cross Correlation) method in order to detect deviation of the line 1E (1E1, 1E2) from a reference position, from an image obtained by photographing the photography field of view 5A of the imaging device 5.

The sensor 10 acquires in advance an image in which the line 1E is located at the reference position and saves the image as a template image 11. A ZNCC processing unit 13 uses the template image 11 to carry out ZNCC processing of template matching on an acquired image 12 of the photography field of view 5A photographed by the imaging device 5.

As illustrated in Fig. 6, in this ZNCC processing, scanning is performed while shifting the template image 11 from the upper left to the right and from up to down of the acquired image 12 (image of photography field of view 5A) in a non-overlapping manner, matching processing is performed for each unit image having a size identical to the size of the template image 11, and the unit image with the highest correlation including the line 1E is extracted.

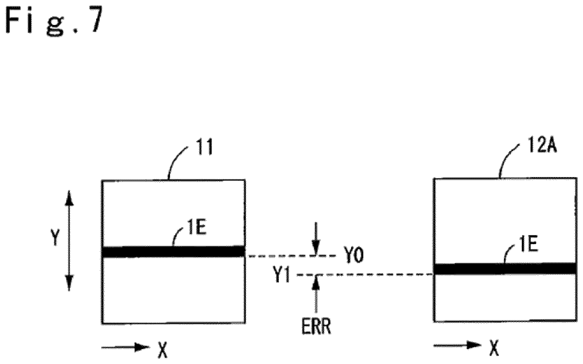

Assuming that the unit image having the highest correlation obtained in the ZNCC processing is a unit image 12A illustrated in Fig. 7, a deviation detecting unit 14 detects a deviation component ERR which is a shift amount of the line 1E, from the difference between a Y coordinate Y1 of one end of the line 1E included in the unit image 12A in the width direction orthogonal to the direction of arrow X, which is the travel direction of the web 1, and a reference coordinate Y0 of the line 1E of the template image 11.

This deviation component ERR is input to the actuator control unit 7 from the sensor 10, and the actuator control unit 7 moves the rewinding reel 2 described with reference to Fig. 8 in the direction of arrow +Y or in the direction of arrow -Y by an amount corresponding to the deviation component ERR.

By repeating operation of feedback control performed as described above, the Y coordinate Y1 of the line 1E of the web 1 traveling in the direction of arrow X matches the reference coordinate Y0. The web 1 is sent to the processing device 4 in a state where the pattern 1A is located at a normal position, and normal processing is performed.

According to the present embodiment, the first field of view area 5A1 and the second field of view area 5A2 are always included in the photography field of view 5A of the photography device 5 as described with reference to Figs. 3 and 4. Therefore, in a case where the web 1 made of the transparent film is used and the deflector roller 3A under the web 1 is black, an image area with higher contrast including the line 1E1 or the line 1E2 can be obtained from one of the first field of view area 5A1 and the second field of view area 5A2, irrespective of whether the line 1E printed on the web 1 is the black line 1E1 or the white line 1E2. The same applies even if the color of the deflector roller 3A under the web 1 and the color of the line 1E are other than black.

Therefore, by using the above-described sensor 10, it is possible to accurately obtain the deviation component ERR which indicates the shift amount of the above-described Y coordinate Y1 from the reference coordinate Y0 by automatically using the image area with the highest contrast, and to accurately perform meandering control of the web 1.

Note that in the above description, web detection performed in a case where the line 1E is printed on the web 1 and meandering control is performed using the line 1E as a reference has been described. However, it is also possible to apply the present invention to detection performed in a case where an image of a web end F as illustrated in Fig. 9 is photographed, and meandering control is performed such that the web end F serves as a reference position. In addition, the present invention can also be applied to detection performed in a case where an image of the picture pattern 1A is photographed and control is performed such that the picture pattern 1A serves as a reference position.

### Reference Signs List

- 1: web
- 1A: pattern
- 1B: cut-off strip
- 1C, 1D: Margin
- 1E, 1E1, 1E2: Line
- 1F: web end
- 2: rewind reel
- 3A: deflector roll
- 3B, 3C: guide roll
- 4: processing device
- 5: imaging device
- 5A: photography field of view
- 5A1: first field of view area
- 5A2: second field of view area
- 6: light source
- 7: actuator control unit
- 8: actuator
- 10: sensor
- 11: template image
- 12: acquired image
- 12A: unit image
- 13: ZNCC processing unit
- 14: deviation detecting unit

## Claims

1. A web detection device comprising:
a light source (6) configured to irradiate an area of a web (1) that includes a detection target with a light beam, the area including the detection target; and **characterised by**
an imaging means (5) configured to photograph a photography field of view (5A) including a first field of view area (5A1) that is an area in which the light beam from the light source (6) is specularly reflected and diffusely reflected and which includes the detection target of the web (1), and a second field of view area (5A2) that is an area in which the light beam from the light source (6) is diffusely reflected and which includes the detection target of the web (1),
wherein the detection target is detected according to an image of the photography field of view.

2. The web detection device according to claim 1, wherein
the light source (6) and the imaging means (5) are disposed such that the first field of view area (5A1) and the second field of view area (5A2) are aligned along a travel direction of the web (1).

3. The web detection device according to claim 1 or 2, wherein
the detection target is detected according to an image with higher contrast from among an image of the first field of view area (5A1) of the web (1) photographed by the imaging means (5) and an image of the second field of view area (5A2) of the web (1) photographed by the imaging means (5).

4. The web detection device according to claim 1, 2, or 3, wherein
the detection target of the web (1) is one of a line (1E) printed on the web (1) along the travel direction, a web end (1F) which is along the travel direction of the web (1), and a pattern (1A) repeatedly printed on the web (1) in the travel direction.

5. A web detection method comprising the steps:
irradiating an area of a web (1) that includes a detection target with a light beam, the area including the detection target; **characterised by**
photographing a photography field of view (5A) by an imaging means (5), the photography field of view (5A) including a first field of view area (5A1) that is an area in which the light beam is specularly reflected and diffusely reflected on the web (1) and which includes the detection target of the web (1), and a second field of view area (5A2) that is an area in which the light beam is diffusely reflected on the web (1) and which includes the detection target of the web (1); and
detecting the detection target according to an image of the photography field of view (5A).

6. The web detection method according to claim 5, wherein
the light source (6) and the imaging means (5) are disposed such that the first field of view area (5A1) and the second field of view area (5A2) are aligned along a travel direction of the web (1).

7. The web detection method according to claim 5 or 6, wherein
the detection target is detected according to an image with higher contrast from among an image of the first field of view area (5A1) of the web (1) photographed by the imaging means (5) and an image of the second field of view area (5A2) of the web (1) photographed by the imaging means (5).

8. The web detection method according to claim 5, 6, or 7, wherein
the detection target of the web (1) is one of a line (1E) printed on the web (1) along the travel direction, a web end (1F) which is along the travel direction of the web (1), and a pattern (1A) repeatedly printed on the web (1) in the travel direction.

## Patentansprüche

1. Bahnerfassungsvorrichtung, umfassend:
eine Lichtquelle (6), die konfiguriert ist, um einen Bereich einer Bahn (1) zu bestrahlen, die ein Erfassungsziel mit einem Lichtstrahl beinhaltet, wobei der Bereich das Erfassungsziel beinhaltet; und **gekennzeichnet durch**
ein Abbildungsmittel (5), das konfiguriert ist, um ein fotografisches Sichtfeld (5A) zu fotografieren, das einen ersten Sichtfeldbereich (5A1) beinhaltet, der ein Bereich ist, in dem der Lichtstrahl von der Lichtquelle (6) spiegelnd reflektiert und diffus reflektiert wird und der das Erfassungsziel der Bahn (1) beinhaltet, und einen zweiten Sichtfeldbereich (5A2) beinhaltet, der ein Bereich ist, in dem der Lichtstrahl von der Lichtquelle (6) diffus reflektiert wird und der das Erfassungsziel der Bahn (1) beinhaltet,
wobei das Erfassungsziel nach einem Bild des fotografischen Sichtfelds erfasst wird.

2. Bahnerfassungsvorrichtung nach Anspruch 1, wobei
die Lichtquelle (6) und das Abbildungsmittel (5) derart angeordnet sind, dass das erste Sichtfeld (5A1) und das zweite Sichtfeld (5A2) entlang einer Fahrtrichtung der Bahn (1) ausgerichtet sind.

3. Bahnerfassungsvorrichtung nach Anspruch 1 oder 2, wobei
das Erfassungsziel nach einem Bild mit höherem Kontrast aus einem Bild des ersten Sichtfeldbereichs (5A1) der Bahn (1), das durch das Abbildungsmittel (5) fotografiert wird, und einem Bild des zweiten Sichtfeldbereichs (5A2) der Bahn (1) erfasst wird, das durch das Abbildungsmittel (5) fotografiert wird,.

4. Bahnerfassungsvorrichtung nach Anspruch 1, 2 oder 3, wobei
das Erfassungsziel der Bahn (1) eines von einer Linie (1E), das auf der Bahn (1) entlang der Fahrtrichtung gedruckt ist, einem Bahnende (1F), das entlang der Fahrtrichtung der Bahn (1) verläuft, und einem Muster (1A) ist, das wiederholt in Fahrtrichtung auf die Bahn (1) gedruckt ist.

5. Bahnerfassungsverfahren, umfassend die folgenden Schritte:
Bestrahlen eines Bereichs einer Bahn (1), der ein Erfassungsziel mit einem Lichtstrahl beinhaltet, wobei der Bereich das Erfassungsziel beinhaltet; **gekennzeichnet durch**:
Fotografieren eines fotografischen Sichtfelds (5A) durch ein Abbildungsmittel (5), wobei das fotografische Sichtfeld (5A) einen ersten Sichtfeldbereich (5A1), der ein Bereich ist, in dem der Lichtstrahl auf der Bahn (1) spiegelnd reflektiert und diffus reflektiert wird und der das Erfassungsziel der Bahn (1) beinhaltet, und einen zweiten Sichtfeldbereich (5A2) beinhaltet, der ein Bereich ist, in dem der Lichtstrahl auf der Bahn (1) diffus reflektiert wird und der das Erfassungsziel der Bahn (1) beinhaltet; und
Erfassen des Erfassungsziels nach einem Bild des fotografischen Sichtfelds (5A).

6. Bahnerfassungsverfahren nach Anspruch 5, wobei
die Lichtquelle (6) und das Abbildungsmittel (5) derart angeordnet sind, dass das erste Sichtfeld (5A1) und das zweite Sichtfeld (5A2) entlang einer Fahrtrichtung der Bahn (1) ausgerichtet sind.

7. Bahnerfassungsverfahren nach Anspruch 5 oder 6, wobei
das Erfassungsziel nach einem Bild mit höherem Kontrast aus einem Bild des ersten Sichtfeldbereichs (5A1) der Bahn (1), das durch das Abbildungsmittel (5) fotografiert wird und einem Bild des zweiten Sichtfeldbereichs (5A2) der Bahn (1) erfasst wird, das durch das Abbildungsmittel (5) fotografiert ist.

8. Bahnerfassungsverfahren nach Anspruch 5, 6 oder 7, wobei
das Erfassungsziel der Bahn (1) eines von einer Linie (1E), das auf der Bahn (1) entlang der Fahrtrichtung gedruckt ist, einem Bahnende (1F), das entlang der Fahrtrichtung der Bahn (1) verläuft, und einem Muster (1A) ist, das wiederholt in Fahrtrichtung auf die Bahn (1) gedruckt ist.

## Revendications

1. Dispositif de détection de bande comprenant :
une source lumineuse (6) conçue pour rayonner sur une zone d'une bande (1) qui comporte une cible de détection dotée d'un faisceau lumineux, la zone comportant la cible de détection ; et **caractérisé par**
un moyen d'imagerie (5) conçu pour photographier un champ de vision photographique (5A) comportant une première zone de champ de vision (5A1) qui est une zone dans laquelle le faisceau lumineux provenant de la source lumineuse (6) est réfléchi de façon spéculaire et réfléchi de manière diffuse et qui comporte la cible de détection de la bande (1) et une seconde zone de champ de vision (5A2) qui est une zone dans laquelle le faisceau lumineux provenant de la source lumineuse (6) est réfléchi de manière diffuse et qui comporte la cible de détection de la bande (1),
la cible de détection étant détectée selon une image du champ de vision photographique.

2. Dispositif de détection de bande selon la revendication 1, dans lequel
la source lumineuse (6) et le moyen d'imagerie (5) sont disposés de telle sorte que le premier champ de vision (5A1) et le second champ de vision (5A2) sont alignés le long d'un sens de déplacement de la bande (1).

3. Dispositif de détection de bande selon la revendication 1 ou 2, dans lequel
la cible de détection est détectée selon une image avec un contraste plus élevé parmi une image de la première zone de champ de vision (5A1) de la bande (1) photographiée par le moyen d'imagerie (5) et une image de la seconde zone de champ de vision (5A2) de la bande (1) photographiée par le moyen d'imagerie (5).

4. Dispositif de détection de bande selon la revendication 1, 2 ou 3, dans lequel
la cible de détection de la bande (1) est l'un parmi une ligne (1E) imprimée sur la bande (1) le long du sens de déplacement, une extrémité de bande (1F) qui est le long du sens de déplacement de la bande (1), et un motif (1A) imprimé à plusieurs reprises sur la bande (1) dans le sens de déplacement.

5. Procédé de détection de bande comprenant les étapes de :
rayonnement d'une zone d'une bande (1) qui comporte une cible de détection dotée d'un faisceau lumineux, la zone comportant la cible de détection ; **caractérisé par**
la photographie d'un champ de vision de photographie (5A) par un moyen d'imagerie (5), le champ de vision de photographie (5A) comportant une première zone de champ de vision (5A1) qui est une zone dans laquelle le faisceau lumineux est réfléchi de façon spéculaire et réfléchi de manière diffuse sur la bande (1) et qui comporte la cible de détection de la bande (1), et une seconde zone de champ de vision (5A2) qui est une zone dans laquelle le faisceau lumineux est réfléchi de manière diffuse sur la bande (1) et qui comporte la cible de détection de la bande (1) ; et
la détection de la cible de détection selon une image du champ de vision photographique (5A).

6. Procédé de détection de bande selon la revendication 5, dans lequel
la source lumineuse (6) et le moyen d'imagerie (5) sont disposés de telle sorte que la première zone de champ de vision (5A1) et la seconde zone de champ de vision (5A2) sont alignées le long d'un sens de déplacement de la bande (1).

7. Procédé de détection de bande selon la revendication 5 ou 6, dans lequel
la cible de détection est détectée selon une image avec un contraste plus élevé parmi une image de la première zone de champ de vision (5A1) de la bande (1) photographiée par le moyen d'imagerie (5) et une image de la seconde zone de champ de vision (5A2) de la bande (1) photographiée par le moyen d'imagerie (5).

8. Procédé de détection de bande selon la revendication 5, 6 ou 7, dans lequel
la cible de détection de la bande (1) est l'un parmi une ligne (1E) imprimée sur la bande (1) le long du sens de déplacement, une extrémité de bande (1F) qui se trouve le long du sens de déplacement de la bande (1), et un motif (1A) imprimé à plusieurs reprises sur la bande (1) dans le sens de déplacement.
